# EUROPÄISCHE PATENTANMELDUNG

(11) **EP 0 943 492 A2**
(43) Veröffentlichungstag der Anmeldung: **22.09.1999**
(21) Anmeldenummer: 99102385.4
(22) Anmeldetag: 08.02.1999
(51) Int. Cl.: B60Q 3/02

(54) **Beleuchtungsanordnung für Frachträume**

(30) Priorität: 20.02.1998 DE 19807348
(71) Anmelder: Diehl Stiftung & Co., 90478 Nürnberg (DE)
(72) Erfinder: Krummer, Thomas Dipl.-Ing., 91781 Weissenburg (DE); Kruppa, Otmar Dipl.-Ing., 86738 Deiningen (DE)

(57) **Zusammenfassung**

Beleuchtungsanordnung für einen abschließbaren Raum (2) mit Brandschutzdecke (3), insbesondere zur Aufnahme von Frachtgut in Passagierflugzeugen, mit in der Brandschutzdecke (3) angeordneten Beleuchtungskörpern (6), die zur statischen Entlastung der Brandschutzdecke (3) und gleichzeitig zur besseren Ausleuchtung des Raumes (2) folgende Merkmale aufweist: In der Brandschutzdecke (3) ist eine Vielzahl von Durchführungsöffnungen (19) verteilt angeordnet, in den Durchführungsöffnungen (19) sind brandfeste Lichtauskopplungselemente (16) derart angeordnet, daß sich ihre Lichtkegel (9) in dem Raum (2) überschneiden, und die Lichtauskopplungselemente (16) sind über Lichtleiter (14) mit zumindest einer gemeinsamen Lichtquelle (15) verbunden.

## Beschreibung

Die Erfindung betrifft eine Beleuchtungsanordnung für einen abschließbaren Raum mit Brandschutzdecke, insbesondere für einen Frachtraum von Passagierflugzeugen, nach dem Oberbegriffvon Anspruch 1.

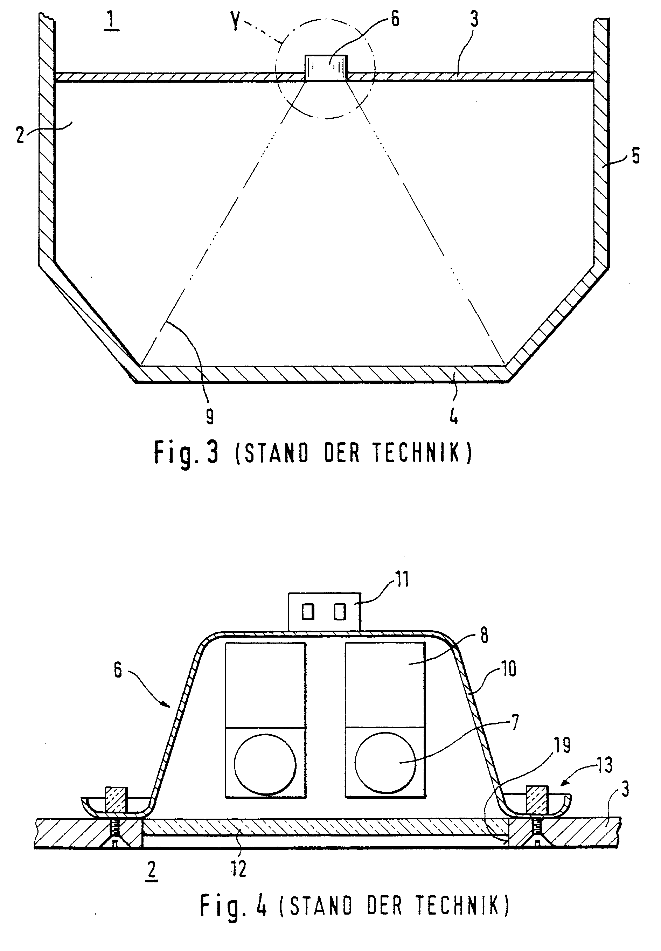

Bei Passagierflugzeugen befindet sich der Frachtraum bzw. befinden sich die Frachträume im allgemeinen unterhalb des Passagierraumes, wobei die Bodenfläche des Passagierraumes im wesentlichen gleichzeitig die Decke des Frachtraumes darstellt. In den Fig. 3 und 4 ist beispielhalt das Prinzip eines herkömmlichen Beleuchtungssystems für solche Frachträume dargestellt.

Der unterhalb des Passagierraumes 1 angeordnete Frachtraum 2 des Passagierflugzeuges wird begrenzt durch die Decke 3, den Boden 4 und die Seitenwände 5. In der Decke 3 des Frachtraumes 2 sind ein oder mehrere Beleuchtungskörper 6 vorgesehen, der den Frachtraum 2 in der durch den Lichtkegel 9 angedeuteten Weise nur teilweise ausleuchtet. Wie in dem vergrößerten Ausschnitt in Fig. 4 zu erkennen ist, weist der Beleuchtungskörper 6 zumeist ein oder zwei Leuchtstofflampen 7 mit entsprechender Elektronik 8 auf. Die Leuchtstofflampen 7 sind in einem feuerfesten Gehäuse, beispielsweise einem Edelstahl-Leuchtengehäuse 10 untergebracht, welches ein Steckergehäuse 11 für die elektrischen Anschlüsse der Leuchtenelektronik 8 aufweist. Das Edelstahlgehäue 10 ist an seiner dem Boden 2 zugewandten Seite mit einer lichtdurchlässigen Abdeckung 12 verschlossen. Die Abdeckung ist im allgemeinen in der Ebene der Frachtraumdecke 3 angeordnet, so daß sich der Beleuchtungskörper 6 oberhalb des Frachtraumes 2 befindet und in den Passagierraum 1 hinein erstreckt. Der Beleuchtungskörper 6 ist mit geeigneten Befestigungsvorrichtungen 13 an der Frachtraumdecke 3 befestigt.

Ein wesentliches Element bei dieser in den Fig. 3 und 4 gezeigten Konstruktion ist die zwischen Frachtraum 2 und Passagierraum 1 notwendigerweise als Brandschutzwand ausgebildete Frachtraumdecke 3. Diese Brandschutzwand darf aus sicherheitstechnischen Gründen auch nicht durch den Beleuchtungskörper 6 unterbrochen werden. Deshalb ist es bei diesen herkömmlichen Beleuchtungssystemen notwendig, den Beleuchtungskörper 6 selbst, d.h. insbesondere das Gehäuse 10, die Abdeckung 12 und die Befestigungsvorrichtungen 13, ebenfalls als Brandschott auszubilden. Hinzu kommt, daß bei diesen relativ großen Beleuchtungskörpern 6, die im allgemeinen eine Ausdehnung zwischen den Befestigungsvorrichtungen 13 zu beiden Seiten des Beleuchtungskörpers 6 von etwa 20 cm aufweisen, eine relativ große Durchführungsöffnung 19 in der Frachtraumdecke 3 eingebracht sein muß, wodurch die Bodenbelastbarkeit des Passagierraumes 1 merklich eingeschränkt wird.

Ferner ist beispielsweise aus der EP-A2-0 795 468 ein Beleuchtungssystem für Passagierkabinen von Passagierflugzeugen bekannt. Die in dieser Druckschrift offenbarte Beleuchtungsanordnung bietet ein einheitliches System, das ein minimales Gewicht und eine hohe Zuverlässigkeit gewährleistet, indem ausgehend von mindestens einer zentralen Lichtquelle Lichtleiter in der Passagierkabine angeordnet sind, die mit den verschiedensten Beleuchtungskörpern in der Passagierkabine verbunden werden. Bei der Beleuchtung der Passagierkabine stellen sich im Gegensatz zu der eingangs beschriebenen Beleuchtung des Frachtraums allerdings nicht die Probleme der eingeschränkten Bodenbelastbarkeit und der Ausgestaltung der Beleuchtungskörper als Brandschutzelemente.

Ausgehend von dem genannten Stand der Technik ist es eine Aufgabe der Erfindung, die bekannte Beleuchtungsanordnung für einen abschließbaren Raum mit Brandschutzdecke, insbesondere für einen Frachtraum eines Passagierflugzeuges, dahingehend zu verbessern, daß die Brandschutzdecke feuer-/brandfest verschlossen, statisch entlastet und gleichzeitig die Ausleuchtung des Raumes verbessert wird.

Diese Aufgabe wird durch die Beleuchtungsanordnung mit den Merkmalen von Patentanspruch 1 gelöst.

Die erfindungsgemäße Lösung erlaubt es, die Durchführungsöffnungen für die Lichtauskopplungselemente im Vergleich zu den bisherigen Konstruktionen klein zu gestalten, wodurch die statische Belastbarkeit der Brandschutzdecke erhöht wird. Außerdem bietet der Einsatz der Lichtleiter- bzw. Glasfasertechnik an sich schon eine erhöhte Brandsicherheit. Ein weiterer Vorteil besteht darin, daß durch den Einsatz mehrerer Beleuchtungskörper, deren Lichtkegel sich im Frachtraum überschneiden, eine bessere Ausleuchtung des gesamten Frachtraumes erreicht wird und durch Verwendung der Glasfasertechnik die geforderte Helligkeit sofort verfügbar ist. Die erfindungsgemäße Konstruktion bietet zudem Gewichts-, Installations- und Wartungsvorteile gegenüber den herkömmlichen Beleuchtungssystemen.

Besonders vorteilhaft ist es, in die Beleuchtungselemente zumindest teilweise einen Brand- oder Rauchdetektor zu integrieren, um die Sicherheit im Frachtraum bzw. im Flugzeug zu erhöhen.

Weitere Ausgestaltungen und Weiterbildungen der vorliegenden Erfindung sind Gegenstand weiterer Unteransprüche.

Die Erfindung wird im folgenden anhand eines bevorzugten Ausführungsbeispiels unter Bezugnahme auf die beiliegende Zeichnung naher erläutert. Darin zeigen:
- Fig. 1: eine prinzipielle Darstellung eines Frachtraumes mit einer erfindungsgemäßen Beleuchtungsanordnung im Schnitt;
- Fig. 2: einen erfindungsgemäßen Beleuchtungskörper in vergrößerter Darstellung gemäß Ausschnitt X von Fig. 1;
- Fig. 3: eine prinzipielle Darstellung eines Frachtraumes mit einem herkömmlichen Beleuchtungssystem im Schnitt; und
- Fig. 4: einen herkömmlichen Beleuchtungskörper in vergrößerter Darstellung gemäß Ausschnitt Y von Fig. 3.

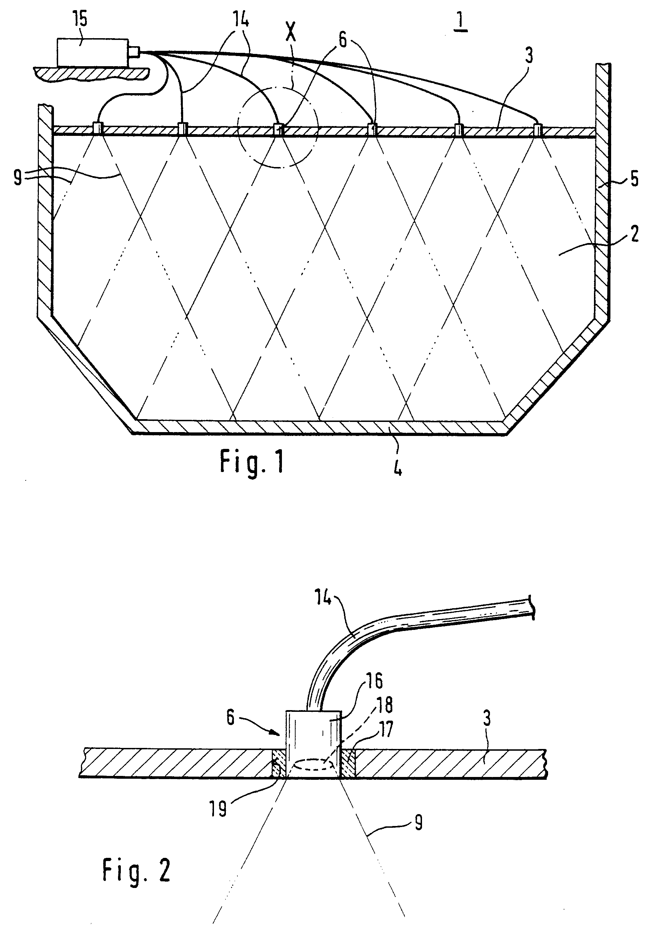

In den Fig. 1 und 2 ist ein bevorzugtes Ausführungsbeispiel einer Beleuchtungsanordnung für einen Frachtraum eines Passagierflugzeuges dargestellt. Dabei sind gleiche Elemente mit den gleichen Bezugszeichen versehen wie bei dem in den Fig. 3 und 4 gezeigten herkömmlichen Frachtraum-Beleuchtungssystem.

Der unterhalb des Passagierraumes 1 angeordnete Frachtraum 2 des Passagierflugzeuges wird begrenzt durch die Decke 3, den Boden 4 und die Seitenwände 5, wobei die Frachtraumdecke 3 im wesentlichen gleichzeitig die Bodenfläche des Passagierraumes 1 bildet und als Brandschutzwand ausgebildet sein muß. In der Frachtraumdecke 3 ist eine Vielzahl von Durchführungsöffnungen 19 rasterartig verteilt vorgesehen, in die jeweils ein brandfester Beleuchtungskörper 6 eingesetzt ist. Die Durchführungsöffnungen 19 sind vorzugsweise gleichverteilt, insbesondere matrixförmig, an der Frachtraumdecke 3 angeordnet. Die erfinderische Verteilung der Beleuchtungskörper 6 gewährleistet eine gleichförmige Ausleuchtung. Ferner ist es problemlos möglich, mit der Verteilung der Beleuchtungskörper 6 die Helligkeit gezielt zu verteilen und dunkle Ecken und Bereiche völlig zu vermeiden.

Die Beleuchtungskörper 6 sind jeweils über einen Lichtleiter oder einen Glasfaserstrang 14 mit einer in einem Lichtverteilergehäuse untergebrachten gemeinsamen Lichtquelle 15 verbunden. Anstelle der einen gemeinsamen Lichtquelle 15 können bei Bedarf auch in geringer Anzahl mehrere Lichtquellen vorgesehen sein, die jeweils mit mehreren Beleuchtungskörpern 6 über Lichtleiter 14 verbunden sind.

Lichtleitersysteme mit zentralen Lichtquellen sind aus der Praxis allgemein bekannt. Das Licht der zentralen Lichtquelle 15 wird mit Hilfe von optischen Systemen im Lichtverteilergehäuse in die Lichtleiter 14 eingespeist. Die Lichtquelle 15 kann eine handelsübliche Glühbirne, eine Halogendampflampe, eine Edelgaslampe, eine Metalldampflampe, ein Laser oder eine andere handelsübliche Lampe sein. Ihr Licht wird entweder gleichzeitig oder in schneller Abfolge nacheinander in die Lichtleiter 14 eingeführt. Ein solches bekanntes Lichtleitersystem ist beispielsweise in der DE-A1-34 34 536 oder der EP-A2-0 795 468 offenbart.

Die Ausleuchtung des Frachtraumes 2 ist insbesondere in Fig. 1 zu erkennen. Die Durchführungsöffnungen 19 bzw. die Beleuchtungskörper 6 sind in der Frachtraumdecke 3 derart angeordnet, daß sich die Lichtkegel 9 der Beleuchtungskörper 6 in dem Frachtraum 2 überschneiden. Hierdurch kann nahezu der gesamte Frachtraum 2, insbesondere auch in den Randbereichen, gleichmäßig ausgeleuchtet werden. Der Grad der Ausleuchtung hängt dabei zum einen von der Anzahl und der Dichte der Beleuchtungskörper 6 in der Frachtraumdecke 3 und zum anderen von dem jeweiligen Öffnungswinkel des Lichtkegels 9 ab. Im Vergleich zu der in Fig. 1 dargestellten Ausleuchtung konnte mit den herkömmlichen Beleuchtungssystemen nur ein zentraler Bereich des Frachtraumes 2 ausreichend erhellt werden, wie in Fig. 3 gezeigt. Außerdem ist bei der erfindungsgemäßen Konstruktion der Beleuchtungsanordnung die geforderte Helligkeit bei Einschalten des Deckenlichtes sofort verfügbar, während bei den herkömmlichen Beleuchtungssystemen mit Leuchtstofflampen 7 eine gewisse Vorheiz- und Wartezeit der Lampe, insbesondere bei tiefen Temperaturen, abgewartet werden muß.

Die Beleuchtungselemente 6 des in Fig. 1 dargestellten Beleuchtungssystems werden nun anhand des in Fig. 2 gezeigten, vergrößerten Ausschnittes X von Fig. 1 näher erläutert.

Das Beleuchtungselement 6 besteht im wesentlichen aus einem notwendigerweise brandfesten Lichtauskopplungselement 16, das mittels eines handelsüblichen, ebenfalls brandfesten Einsatzes 17 in eine Durchführungsöffnung 19 in der Frachtraumdecke 3 eingesetzt ist. Das Lichtauskopplungselement 16 hat dabei einen Durchmesser von nur etwa 1 cm, ist also deutlich kleiner als das Gehäuse 10 eines in Fig. 4 dargestellten herkömmlichen Beleuchtungselementes 6. Das Vorsehen der Durchführungsöffnung 19 bzw. der Einsatz des Lichtauskopplungselements 16 in die Frachtraumdecke 3 beeinträchtigt somit kaum die statische Belastbarkeit der Frachtraumdecke 3, weshalb problemlos eine große Anzahl solcher Durchführungsöffnungen 19 in die Frachtraumdecke 3 integriert werden kann.

In das Lichtauskopplungselement 16 ist ein mit der zentralen Lichtquelle 15 verbundener Lichtleiter 14 eingeführt, welcher durch ein geeignetes optisches System 18 in an sich bekannter Weise das Licht in den Frachtraum 3 auskoppelt bzw. ausstrahlt. Zusätzlich kann in den Durchführungskörper 16 ein (nicht dargestellter) Brand- oder Rauchdetektor eingebaut sein, um die Sicherheit zu erhöhen.

Ferner bietet die Verwendung von Lichtleitern oder Glasfasersträngen 14 eine höhere Brandsicherheit gegenüber Beleuchtungssystemen mit Leuchtstofflampen 8. Außerdem ist es technisch einfacher, die relativ kleinen Lichtauskopplungselemente 16 brandfest auszubilden, als die vergleichsweise sehr großen Leuchtengehäuse 10, 12 der Leuchtstofflampen 8.

Ein weiterer Vorteil des erfindungsgemäßen Beleuchtungssystems liegt in seinem geringen Gewicht und seinem geringen Installations- und Wartungsaufwand.

Schließlich bietet die Erfindung einen weiteren Vorteil dadurch, daß der Detektor sich in dem Gehäuse der Lichtquelle und nicht an der Austrittsöffnung befindet. Denn dadurch wird für den ganzen beleuchteten Bereich nur ein Detektor benötigt - ein zweiter Detektor wäre wegen der Redundanz vorsehbar. Und die zusätzlichen Vorteile sind, daß sich der Detektor im geschützten Raum befindet und daß keine Leitungen geführt werden müssen.

### Bezugszeichenliste

- 1: Passagierraum
- 2: Frachtraum
- 3: Decke
- 4: Boden
- 5: Seitenwand
- 6: Beleuchtungskörper
- 7: Leuchtstofflampe
- 8: Leuchtenelektronik
- 9: Lichtkegel
- 10: Edelstahlgehäuse
- 11: Steckergehäuse
- 12: Abdeckung
- 13: Befestigungsvorrichtungen
- 14: Lichtleiter
- 15: Lichtquelle
- 16: Lichtauskopplungselement
- 17: Einsatz
- 18: optisches System
- 19: Durchführungsöffnung

## Patentansprüche

1. Beleuchtungsanordnung für einen abschließbaren Raum (2) mit Brandschutzdecke (3), insbesondere zur Aufnahme von Frachtgut in Passagierflugzeugen, mit in der Brandschutzdecke (3) angeordneten Beleuchtungskörpern (6), **gekennzeichnet durch** die Kombination folgender Merkmale:
a) es ist eine Vielzahl von Durchführungsöffnungen (19) verteilt in der Brandschutzdecke (3) angeordnet,
b) in den Durchführungsöffnungen (19) sind brandfeste Lichtauskopplungselemente (16) derart angeordnet, daß sich ihre Lichtkegel (9) in dem Raum (2) überschneiden, und
c) die Lichtauskopplungselemente (16) sind über Lichtleiter (14) mit zumindest einer gemeinsamen Lichtquelle (15) verbunden.

2. Beleuchtungssystem nach Anspruch 1,
**dadurch gekennzeichnet,**
daß in den Beleuchtungskörpern (6) bzw. in der Lichtquelle (15) zumindest teilweise Brand- oder Rauchdetektoren integriert sind.

3. Beleuchtungssystem nach Anspruch 1 oder 2,
**dadurch gekennzeichnet,**
daß die Durchführungsöffnungen (19) rasterförmig in der Frachtraumdecke (3) angeordnet sind.

4. Beleuchtungssystem nach einem der Ansprüche 1 bis 3,
**dadurch gekennzeichnet,**
daß die Lichtaustritte vernetzt sind und eine Redundanz durch das Vernetzen der Lichtaustritte erzielt ist.
